# EUROPÄISCHE PATENTSCHRIFT

(11) **EP 2 588 332 B1**
(45) Veröffentlichungstag und Bekanntmachung des Hinweises auf die Patenterteilung: **20.12.2017**
(21) Anmeldenummer: 11718046.3
(22) Anmeldetag: 03.05.2011
(51) Int. Cl.: B60G 17/04

(54) **HÖHENABHÄNGIGE KOMPRESSORSTEUERUNG**
ALTITUDE DEPENDENT COMPRESSOR CONTROL
RÉGLAGE DU COMPRESSEUR DÉPENDENT DE L'ALTITUDE

(30) Priorität: 30.06.2010 DE 102010017654
(43) Veröffentlichungstag der Anmeldung: 08.05.2013
(73) Patentinhaber: Continental Teves AG & Co. oHG, 60488 Frankfurt (DE)
(72) Erfinder: ENGELHARDT, Marek, 36289 Friedewald (DE)
(86) Internationale Anmeldenummer: PCT/EP2011/057011
(87) Internationale Veröffentlichungsnummer: WO 2012/000703

(56) Entgegenhaltungen:
- EP-A2- 1 961 960
- EP-B1- 1 644 640
- DE-A1- 10 331 600
- DE-A1- 10 354 491
- DE-A1-102008 028 781
- DE-C1- 19 813 672

## Beschreibung

Die Erfindung betrifft ein Verfahren zur Steuerung eines elektrisch angetriebenen und bedarfsabhängig ein- und ausschaltbaren Kompressors einer Luftfederungsanlage, wobei bei dem Verfahren innerhalb einer Steuerungseinrichtung die Temperatur des Kompressors bzw. die Temperatur der in dem Kompressor verdichteten Luft nach einem Temperaturmodell berechnet wird, welches als Eingangsgrößen u.a. die elektrische Spannung des Kompressors, die Umgebungstemperatur und die Druckverhältnisse in der Luftfederungsanlage berücksichtigt, wonach der Kompressor abhängig von der berechneten Temperatur ein- oder ausgeschaltet wird.

Für die Versorgung von Luftfedern in Fahrzeugen werden bisher größtenteils elektrisch angetriebene Kompressoren verwendet, bei denen Konstruktion und Materialauswahl bei der Herstellung mit Hilfe von Lebensdauerberechnungen bzw. Annahme von Belastungskollektiven optimiert wird, um möglichst preiswerte und dennoch ausreichend haltbare Kompressoren auf den Markt zu bringen. Dazu müssen dann aber auch teilweise komplexe Verfahren zur Regelung der Kompressoren vorgesehen sein, mit deren Hilfe der Kompressorantrieb abhängig vom erforderlichen Systemdruck, von der Temperatur, und/oder abhängig von der Laufzeit an- und abgeschaltet wird, um so vorbestimmte Last- und Temperaturkollektive nicht zu überschreiten.

Durch EP 1 644 640 B1 ist ein Verfahren zur Steuerung des Betriebs des Kompressors bekannt, bei dem der Kompressor von einem Steuergerät zur Vermeidung thermischer Schäden dann abgeschaltet wird, wenn ein von dem Steuergerät berechneter Temperatur-Schätzwert einen oberen Schwellenwert überschreitet. Bei dem bekannten Verfahren berechnet das Steuergerät unter Heranziehung des Temperatur-Schätzwertes als Zustandsgröße eine Abkühlfunktion, die den zeitlichen Verlauf der Abkühlung des Kompressors repräsentiert.

Aus der DE 19621 946 C2 ist ein Verfahren bekannt, bei dem für die aktuelle Betriebstemperatur des Kompressors ständig ein Schätzwert vorgegeben wird. Bei eingeschaltetem Kompressor wird der letzte Schätzwert jeweils nach einer vorgegebenen Zeitspanne um eine vorgegebene geringe Temperaturdifferenz erhöht und bei ausgeschaltetem Kompressor wird der letzte Schätzwert der Temperatur jeweils nach einer vorgegebenen Zeitspanne um eine vorgegebene geringe Temperaturdifferenz erniedrigt. Wenn der so berechnete Schätzwert des eingeschalteten Kompressors einen oberen Schwellwert überschreitet, wird der Kompressor abgeschaltet. Nach dem Abschalten kann der Kompressor wieder eingeschaltet werden, wenn der Schätzwert einen unteren Schwellwert überschreitet. Damit soll der Kompressor im eingeschalteten Zustand zuverlässig vor einer zu großen Wärmeentwicklung geschützt werden.

Die DE 198 13 672 C1 offenbart eine Luftfederungsanlage für ein Fahrzeug, bei der sowohl der Druck in einem Druckspeicher mit einem Sensor gemessen wird und zu einem Signalwert für die Steuerung verarbeitet wird als auch der Umgebungsdruck, d.h. der Luftdruck in der Fahrzeugumgebung gemessen und zu einem weiteren Signalwert für die Steuerung verarbeitet wird.

Ein in der Luftfederungsanlage vorhandener elektrisch angetriebener, einstufiger Kompressor füllt den Druckspeicher bis zu einem Druck, der üblicherweise zwischen einem unteren und oberen Grenzdruck liegt. Der vom elektrisch angetriebenen Kompressor geförderte Volumenstrom hängt natürlich vom jeweiligen Umgebungsdruck und vom Gegendruck im Druckspeicher ab.

Die Lehre der DE 198 13 672 C1 geht nun dahin, die Steuerung so auszubilden, dass der obere und/oder der untere Grenzdruck im Druckspeicher, bei dem sich der Kompressor automatisch abschaltet und/oder einschaltet, abhängig vom Umgebungsdruck festgelegt werden. Da der durch den Kompressor maximal erzielbare Luftdruck zum Aufladen des Druckspeicher in großen Höhen, also etwa bei Bergfahrten, merkbar niedriger ist als auf Meereshöhe, würde ohne die Lösung der DE 198 13 672 C1 der üblicherweise fest eingestellte obere Grenzdruck von z.B. 18 bar in großen Höhen nie erreicht und der Kompressor nicht wieder ausgeschaltet werden. Dies kann zur Überhitzung und zur Zerstörung des Kompressors führen.

Die DE 10 2006 039 538 A1 betrifft eine Luftfederungsanlage eines Kraftfahrzeuges und ein Verfahren zur Steuerung eines zugehörigen bedarfsabhängig ein- und ausschaltbaren Kompressors, bei dem die Temperatur der in dem Kompressor verdichteten Luft während der Laufzeiten des Kompressors mit einem Temperaturmodell berechnet wird. Dabei wird für den ersten Lauf des Kompressors ein anderes Temperaturmodell zugrunde gelegt als für die nachfolgenden Läufe des Kompressors, was zu einer Verlängerung der ersten Laufzeit des Kompressors gegenüber den nachfolgenden Laufzeiten und damit zu einem optimierten Laufzeitverhalten führt.

Die EP 1 961 960 A2 beschreibt ein Verfahren zur Steuerung eines Kompressors offener Luftfederungsanlagen. Dabei kann der Kompressor in Abhängigkeit seines Wirkungsgrades abgeschaltet werden. Eine Simulation oder ein Modell ermittelt dafür eine Größe (z.B. die Kompressortemperatur) und setzt diese in Abhängigkeit zu dem Wirkungsgrad. Ein Parameter dieser Berechnung kann dabei der Umgebungsdruck sein.

Der Erfindung liegt die Aufgabe zugrunde, ein Verfahren zur Steuerung eines bedarfsabhängig ein- und ausschaltbaren Kompressors einer Luftfederungsanlage eines Kraftfahrzeuges zu schaffen, bei dem einerseits alle Bauteile des Kompressors auch bei Einsatz des Fahrzeugs in sehr unterschiedlichen geodätischen Höhen gut vor Schäden aufgrund einer zu großen Wärmeentwicklung geschützt sind und andererseits eine ausreichende Laufzeit des Kompressors erreicht wird, um Befüllungen/Umfüllvorgänge sicher durchführen zu können.

Gelöst wird diese Aufgabe durch die Merkmale des Hauptanspruchs. Weitere vorteilhafte Ausbildungen sind in den Unteransprüchen offenbart.

Dabei ist die für das Verfahren erforderliche Steuerungseinrichtung in ihren Algorithmen so ausgelegt, dass die Steuerungseinrichtung für die Berechnung der Temperatur des Kompressors nach dem Temperaturmodell den das Fahrzeug umgebenden Luftdruck (d.h. der Umgebungsdruck) als Eingangsgröße berücksichtigt, wobei die Parameter des Temperaturmodells abhängig von diesem Luftdruck angepasst werden. Auch wenn Förderleistung in großen Höhen, d.h. weit oberhalb von Normal-Null (NN, Meereshöhe), durch den verringerten Luftdruck merkbar gegenüber der Förderleistung bei NN absinkt, so kann durch die erfindungsgemäße Ausbildung des Verfahrens dieser Effekt durch eine verlängerte Kompressorlaufzeit zumindest teilweise korrigiert werden. Durch den in großen Höhen entsprechend geringeren Gegendruck/Fülldruck im Kompressorzylinder wird der Kompressor nämlich weniger warm. In großen Höhen ist der geringe Umgebungsdruck (Vordruck) des Kompressors verantwortlich dafür, dass der Volumenstrom kleiner ist und auch die Erwärmung des Kompressors geringer ist. Eine Abschaltung nach dem "normalen" Temperaturmodell ohne Berücksichtigung des Umgebungsdrucks als Eingangsgröße und eine entsprechende Anpassung der Parameter des Temperaturmodells würde dagegen zu früh erfolgen und somit nicht die nötigen Luftmengen im System zur Verfügung stellen. Dass der "Sättigungsdruck" des Kompressors in hohen Höhen kleiner ist als bei NN, ist hiervon unberührt. Unter dem Begriff "Sättigungsdruck" versteht man in diesem Fall den Umgebungsdruck, bei dem das Verhältnis zwischen Vordruck (Umgebungsdruck) und Gegendruck im Kompressorzylinder so ausgebildet ist, dass keine Förderung mehr möglich ist.

Grundsätzlich wurde während der Entwicklung von Luftfederungsanlagen für Geländefahrzeuge, die auch im Hochgebirge einsetzbar sind, festgestellt, dass in einer Höhe von 2800m über NN das "normale" Temperaturmodell zu schlecht prognostizierte Werte für die Kompressortemperatur liefert. Da aber auch in Höhen weit über NN das Fahrzeug durch eine Systemluftmengenanpassung hinreichend schnell auf einen Beladungswechsel reagieren können muss, ist erst die erfindungsgemäße Ausbildung des Verfahrens in der Lage, gute Prognosen für die Kompressortemperatur zu liefern.

Dabei berücksichtigt die Steuerungseinrichtung lediglich bei Füllvorgängen der Luftfederungsanlage aus der Atmosphäre den das Fahrzeug umgebenden Luftdruck als Eingangsgröße. Damit werden auch nur in diesen Fällen und in großen Höhen durch genauere Temperaturprognosen längere Laufzeiten des Kompressors geschaltet. Dies führt natürlich zur Energieeinsparung. In den bisherigen Typen von geschlossenen Luftfederungsanlagen (GLV) mit entsprechend ausgelegten Druckspeichern war und ist natürlich die Forderung nach Berücksichtigung des Umgebungsdrucks kaum notwendig, da hier eine Systemluftmengenveränderung nur in Leckagefällen erforderlich ist. Ein reiner Beladungswechsel erfordert bei Fahrzeugen mit geschlossener Luftfederungsanlage systembedingt keine höhenabhängige Luftmengenanpassung im System. Umso wichtiger ist aber die Berücksichtigung des Umgebungsdrucks bei Fahrzeugen mit offener Luftfederungsanlage (OLV), also Fahrzeugen, die Luftverluste aus der Umgebung ausgleichen müssen.

Der das Fahrzeug umgebende Luftdruck wird durch Berechnung aus der durch ein Positionsbestimmungssystem (GPS, Global Positioning System) vorgegebenen absoluten Höhe des Fahrzeuges über Normal-Null ermittelt und als Eingangsgröße der Steuerungseinrichtung vorgegeben. Die Berechnung kann z.B. im GPS System oder in der Steuerungseinrichtung der Luftfederungsanlage erfolgen. Mit Hilfe eines GPS-Empfängers kann durch Erkennen der absoluten Höhe über die isobare Druckformel auf einen Umgebungsdruck geschlossen werden. Wenn auch zurzeit noch zu wenige Fahrzeuge mit einem GPS-Empfänger ausgerüstet werden, ist eine Übermittlung dieser Daten an das Steuergerät der Luftfederungsanlage bereits ohne Weiteres möglich.

Eine vorteilhafte Ausbildung besteht darin, dass die Anpassung der Parameter des Temperaturmodells abhängig vom umgebenden Luftdruck stufenförmig erfolgt. Dies bedeutet, dass lediglich ungefähr festgestellt wird, in welcher Höhe sich das Fahrzeug befindet. Dies könnte z.B. in drei Stufen geschehen, und zwar in der Form
a) Fahrzeug befindet sich auf Meereshöhe,
b) Fahrzeug befindet sich auf 1000m-2000m über NN und
c) Fahrzeug befindet sich auf höher als 2000m über NN.
Solche Stufen sind bereits für eine gute Anpassung des Temperaturmodells ausreichend. Versuche zeigen, dass durch diese Vorgehensweise eine realitätsnahe Abbildung der berechneten Modelltemperatur mit der gemessenen Temperatur erzielt werden kann.

Der das Fahrzeug umgebende Luftdruck könnte auch durch die Regelungseinrichtung einer im Fahrzeug vorhandenen Klimaanlage ermittelt und als Eingangsgröße der Steuerungseinrichtung vorgegeben werden. Dabei kann man in besonders eleganter Weise auf bereits vorhandene Daten zurückgreifen. In der aktuellen Entwicklung sind Systeme, bei denen der Umgebungsdruck durch die Software der Klimaanlagenregelung bestimmt wird und dem Steuergerät der Luftfederungsanlage über den CAN-BUS zur Verfügung gestellt.

Mit einfachen und bekannten Sensoren könnte der das Fahrzeug umgebende Luftdruck leicht durch einen in der Luftfederungsanlage vorgesehenen Sensor ermittelt und als Eingangsgröße der Steuerungseinrichtung vorgegeben werden.

Vorteilhafterweise lässt sich das Verfahren, wie bereits dargestellt, in einer Luftfederungsanlage für ein Kraftfahrzeug verwenden.

## Patentansprüche

1. Verfahren zur Steuerung eines elektrisch angetriebenen und bedarfsabhängig ein- und ausschaltbaren Kompressors einer geschlossenen Luftfederungsanlage mit einem Druckspeicher, wobei innerhalb einer Steuerungseinrichtung die Temperatur des Kompressors nach einem Temperaturmodell berechnet und der Kompressor abhängig von der berechneten Temperatur ein- oder ausgeschaltet wird, wobei die Steuerungseinrichtung für die Berechnung der Temperatur des Kompressors nach dem Temperaturmodell den das Fahrzeug umgebenden Luftdruck als Eingangsgröße berücksichtigt und die Parameter des Temperaturmodells abhängig von diesem Luftdruck angepasst werden, **dadurch gekennzeichnet, dass** die Steuerungseinrichtung bei Füllvorgängen zur Luftmengenanpassung der Luftfederungsanlage aus der Atmosphäre den das Fahrzeug umgebenden Luftdruck als Eingangsgröße berücksichtigt, wobei der das Fahrzeug umgebende Luftdruck durch Berechnung aus der durch ein Positionsbestimmungssystem vorgegebenen absoluten Höhe des Fahrzeuges über Normal-Null ermittelt und als Eingangsgröße der Steuerungseinrichtung vorgegeben wird.

2. Verfahren nach Anspruch 1 oder 2, bei dem die Anpassung der Parameter des Temperaturmodells abhängig vom umgebenden Luftdruck stufenförmig erfolgt.

3. Luftfederungsanlage für ein Kraftfahrzeug mit einer Steuerungseinrichtung zur Durchführung des Verfahrens nach Anspruch 1 bis 2.

## Claims

1. Method for controlling an electrically driven compressor which can be switched on and off according to demand, of a closed pneumatic suspension system with a pressure accumulator, wherein within a control device the temperature of the compressor is calculated according to a temperature model and the compressor is switched on or off as a function of the calculated temperature, wherein the control device for the calculation of the temperature of the compressor according to the temperature model takes into account the air pressure surrounding the vehicle, as an input variable, and the parameters of the temperature model are adapted as a function of this air pressure, **characterized in that** during filling processes the control device takes into account, for the purpose of adapting the quantity of air of the pneumatic suspension system from the atmosphere, the air pressure surrounding the vehicle as an input variable, wherein the air pressure surrounding the vehicle is determined by calculation from the absolute height of the vehicle above normal zero, which is predefined by means of a position-determining system, and said air pressure is predefined as an input variable of the control device.

2. Method according to Claim 1 or 2, in which the adaptation of the parameters of the temperature model is carried out step-by-step as a function of the surrounding air pressure.

3. Pneumatic suspension system for a motor vehicle having a control device for carrying out the method according to Claims 1 to 2.

## Revendications

1. Procédé destiné à commander un compresseur entraîné électriquement et pouvant être activé et désactivé en fonction des besoins d'un système de suspension pneumatique fermé comportant un accumulateur de pression, dans lequel la température du compresseur est calculés à l'intérieur d'un dispositif de commande conformément à un modèle de température et le compresseur est activé ou désactivé en fonction de la température calculée, dans lequel le dispositif de commande prend en compte en tant que grandeur d'entrée la pression de l'air ambiant autour du véhicule pour calculer la température du compresseur conformément au modèle de température et les paramètres du modèle de température sont adaptés en fonction de ladite pression d'air, **caractérisé en ce que** le dispositif de commande, lors des processus de remplissage, prend en compte, en tant que grandeur d'entrée pour l'adaptation de la quantité d'air du système de suspension pneumatique, la pression d'air provenant de l'atmosphère entourant le véhicule, dans lequel la pression de l'air ambiant autour du véhicule est déterminée par calcul à partir de la hauteur absolue prédéterminée par un système de détermination de position du véhicule au-dessus d'une valeur normale ou nulle et est prédéterminée en tant que grandeur d'entrée du dispositif de commande.

2. Procédé selon la revendication 1 ou 2, dans lequel l'adaptation des paramètres du modèle de température s'effectue par paliers en fonction de la pression de l'air ambiant.

3. Système de suspension pneumatique destiné à un véhicule automobile comportant un dispositif de commande destiné à mettre en oeuvre le procédé selon la revendication 1 à 2.
